# EUROPÄISCHE PATENTSCHRIFT

(11) **EP 0 504 820 B1**
(45) Veröffentlichungstag und Bekanntmachung des Hinweises auf die Patenterteilung: **01.02.1995**
(21) Anmeldenummer: 92104616.5
(22) Anmeldetag: 17.03.1992
(51) Int. Cl.: G01C 19/72

(54) **Mehrachsige faseroptische Drehratensensoranordnung**
Multiple axis fibre optic rotation rate sensor device
Dispositif capteur de vitesse de rotation multiaxial à fibre optique

(30) Priorität: 18.03.1991 DE 4108807
(43) Veröffentlichungstag der Anmeldung: 23.09.1992
(73) Patentinhaber: LITEF GmbH, 79115 Freiburg (DE)
(72) Erfinder: Kemmler, Manfred, W-7801 Vörstetten (DE)
(74) Vertreter: TER MEER STEINMEISTER & PARTNER GbR

(56) Entgegenhaltungen:
- EP-A- 0 288 032
- EP-A- 0 400 197
- US-A- 4 588 296

## Beschreibung

Die Erfindung betrifft eine mehrachsige faseroptische Drehratensensoranordnung mit einer Lichtquelle, der ein erster Strahlteiler, ein Polarisator, ein zweiter Strahlteiler und ein Phasenmodulator in dieser Reihenfolge nachgeschaltet sind, mit einem von einem zweiten Ausgang des ersten Strahlteilers beaufschlagten Photodetektor sowie mit einem mit dem Photodetektor gekoppelten Analog-/Digital-Wandler, der eine Drehraten-rückstellende Regelschaltung über einen Digital-/Analog-Wandler speist, der mit einem Rückstelleingang des Phasenmodulators verbunden ist.

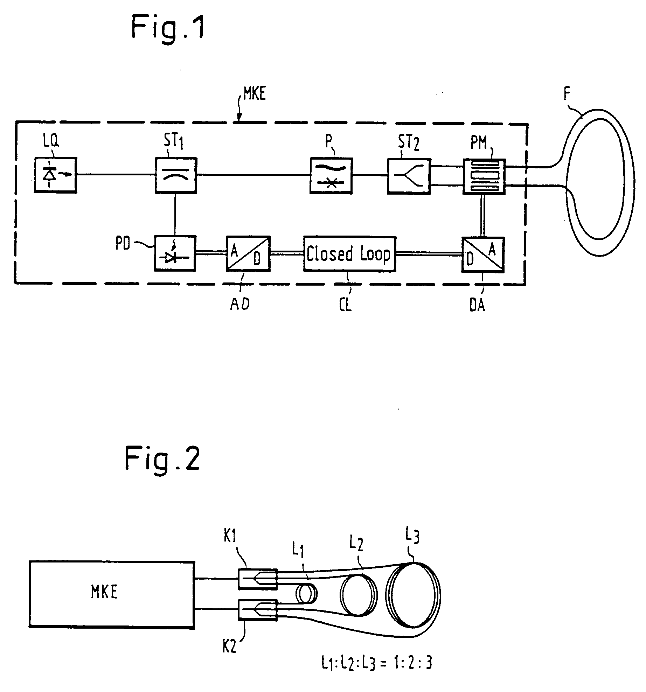

Zum Minimalaufbau eines einachsigen faseroptischen Drehratensensors (vgl. Fig. 1 der beigefügten Zeichnungen) gehören bekanntermaßen die durch eine gestrichelte Umrandung MKE (Minimal-Konfiguration Einachsig) zu einer Schaltungsanordnung (Schaltungsblock) zusammengefaßten Baugruppen, nämlich eine Lichtquelle LQ, ein erster Strahlteiler ST₁, ein Polarisator P, ein zweiter Strahlteiler ST₂, ein Phasenmodulator PM sowie die an letzteren angeschlossene Faserspule F. Die durch die Faserspule beeinflußten rücklaufenden Lichtstrahlen werden an einem zweiten Ausgang des ersten Strahlteilers ST₁ ausgekoppelt und gelangen auf einen Photodetektor PD, dessen elektrische Signale einen A/D-Wandler AD beaufschlagen, der eine im Prinzip bekannte digitale Signalauslese- und eine eventuelle Sagnac-Phase rückstellende Regelschaltung CL (CL = Closed Loop) speist, deren Rückstellsignal über einen D/A-Wandler DA den Phasenmodulator PM in bekannter Weise mit dem Rückstellsignal beaufschlagt.

Um die Auswertung des Auslesesignals zu vereinfachen und um insbesondere die Verwendung von preiswerten Wandlerbausteinen und Mikroprozessoren zu ermöglichen, wurde mit der europäischen Patentanmeldung EP-A-0 400 197 vorgeschlagen, die Lichtquelle LQ gepulst zu betreiben, und zwar derart, daß die Einschaltzeit gerade der Umlaufzeit des Lichts durch die Faserspule F entspricht. Dadurch wird es möglich, das Ausgangssignal am Photodetektor PD niederfrequent zu transformieren, so daß eine Weiterverarbeitung in gut beherrschbaren Frequenzbereichen möglich wird.

Bisher werden jedoch für die Messung mehrerer, insbesondere dreier, unabhängiger Drehraten mit der oben anhand der Fig. 1 erläuterten minimalen Konfiguration mehrere, insbesondere drei, unabhängige Faserkreiselaufbauten benötigt. Die durch den Schaltungsblock MKE umgrenzten Bauteile oder Baugruppen beinhalten jedoch zumindest zum Teil sehr teure Komponenten. So wird, um nur ein Beispiel zu nennen, für die Lichtquelle LQ bei Verwendung einer Superlumineszenzdiode zur Temperaturkonstanthaltung ein Peltier-Element mit zugeordnetem Steuerkreis benötigt.

Der Erfindung liegt damit die Aufgabe zugrunde, eine mehrachsige faseroptische Drehratensensoranordnung zu schaffen, die wesentlich preisgünstiger herstellbar ist und insbesondere eine Mehrfachausnutzung elektronischer und optischer Baugruppen vorsieht.

Aus der Druckschrift US-A-4 588 296 (vgl. insbesondere dortige Fig. 40B mit zugehöriger Beschreibung) ist bereits eine dreiachsige faseroptische Drehratensensoranordnung bekannt, bei welcher der Lichtstrahl nach Durchlauf durch ein Raumfilter durch einen in integrierter Optik ausgeführten Strahlteilerbaustein in drei gleiche Paare von Lichtstrahlen aufgeteilt wird, die in drei gleichartige, in den drei Raumachsen ausgerichtete Faserspulen eingestrahlt werden. Durch Multiplexansteuerung und -auswertung ist eine Trennung und Unterscheidung der drei Auslesesignale möglich. Diese bekannte Triadenanordnung ist jedoch nach wie vor mit dem grundsätzlich technologischen Problem behaftet, daß bei der Auslesung sowie in der Rückstellelektronik außerordentlich hohe Frequenzen verarbeitet werden müssen. Dies gilt insbesondere dann, wenn, was anzustreben ist, die Länge der einzelnen Faserspulen verkürzt wird.

Eine erfindungsgemäße mehrachsige faseroptische Drehratensensoranordnung der eingangs genannten Art ist erfindungsgemäß dadurch gekennzeichnet, daß an die beiden Ausgänge des Phasenmodulators je ein Koppler angeschlossen ist, welche die beiden modulierten Ausgangslichtstrahlen des zweiten Strahlteilers in eine gleiche Mehrzahl von Teillichtstrahlen aufteilen und paarweise in die jeweiligen beiden Enden einer Mehrzahl von Faserspulen L₁, L₂, L₃, ..., Lₙ einstrahlen, deren Lichtweglängen im Verhältnis L₁ : L₂ : L₃ : ... Lₙ = 1 : 2 : 3 : ... : n gewählt sind und daß die Lichtquelle mit einem Tastverhältnis EIN/AUS-geschaltet wird, dessen EIN-Dauer der Umlaufzeit des Lichts durch die kürzeste Faserspule L₁ und dessen AUS-Dauer mindestens der Umlaufzeit des Lichts durch die längste der Faserspulen Lₙ entspricht.

Für den bevorzugten Anwendungsfall, nämlich für die unabhängige Drehratenmessung in drei orthogonalen Raumachsen mit entsprechend ausgerichteten Faserspulen ergibt sich also als wesentliches Merkmal der Erfindung, daß die drei Spulen, elektrisch-optisch gesehen, parallelgeschaltet sind und ihre Längen im Verhältnis L₁ : L₂ : L₃ = 1 : 2 : 3 stehen, wobei ein Lichtpuls mit einer "Länge" ≦ L₁ am Photodetektor eine Pulsfolge von drei getrennten Pulsen bewirkt, die eindeutig den drei Spulen zugeordnet werden können. Dabei ist mit "Länge" des Pulses die Umlaufzeit des Lichts durch die kürzeste Faserspule L₁ gemeint. Beispielsweise mittels Zeitmultiplex ist damit die Messung von Drehraten in allen drei Raumachsen möglich. Um, wie in der genannten europäischen Patentanmeldung EP-A1-0 400 197 erläutert, eine niederfrequente Auswerteelektronik benutzen zu können, müssen demgemäß jeweils zwei der Pulse ausgeblendet werden. Diese Ausblendung erfolgt am besten dadurch, daß jeweils eine π-Phasenschiebung für die beiden zu einem bestimmten Auswertezeitpunkt nicht erwünschten Pulse am Phasenmodulator erzwungen wird, wodurch der Arbeitspunkt auf das Minimum einer Cosinus-Funktion gelegt wird, die so gut wie kein Auslesesignal liefert. Diese π-Phasenschiebung ist möglich, da aufgrund der unterschiedlichen Längen der Faserspule die Pulse nacheinander den Phasenmodulator (PM) passieren. Sobald die Faserspulen wieder "lichtleer" sind, kann ein weiterer Puls durch die Spulen geschickt werden.

Der wesentliche Vorteil der Erfindung ist, daß für eine nachsige Drehratensensoranordnung die in Fig. 1 durch den Block MKE umrandeten Komponenten bzw. Baugruppen nur einmal vorhanden sein müssen.

Die Erfindung und vorteilhafte Einzelheiten derselben werden nachfolgend unter Bezug auf die Zeichnung in beispielsweiser Ausführungsform näher erläutert. Es zeigen:
- Fig. 1: eine (bereits erläuterte), dem Stand der Technik entsprechende Minimalkonfiguration eines einachsigen Faserkreisels;
- Fig. 2: die Prinzipanordnung eines dreiachsigen Faserkreisels mit erfindungsgemäßen Merkmalen;
- Fig. 3: zeitkorrelierte Signalverläufe für die Optimierung der Auslesung bezüglich einer Achse der dreiachsigen Drehratensensoranordnung nach Fig. 2; und
- Fig. 4: die zeitkorrelierte Darstellung der Ansteuersignale für den Phasenmodulator bei Zeitmultiplexauslesung für drei Achsen.

Die erforderliche Minimalkonfiguration für einen einachsigen faseroptischen Drehratensensor (Faserkreisel) gemäß Fig. 1 wurde oben bereits erläutert.

Bei der Anordnung nach Fig. 2, die zur Erläuterung des Prinzips der Erfindung bei Anwendung auf eine dreiachsige Drehratensensoranordnung zeigt, entspricht der Block MKE im Prinzip genau der elektrooptischen Ansteuer-, Regel- und Auswerteelektronik der Fig. 1. Im Gegensatz zur Anordnung nach Fig. 1 sind an die beiden Ausgänge des Phasenmodulators PM jedoch jeweils ein Koppler K1 bzw. K2 angeschlossen, welche den jeweils eintretenden Lichtstrahl in drei gleiche Teillichtstrahlen aufteilen. Diese Teillichtstrahlen werden zugeordnet und paarweise in die Enden von drei Faserspulen L₁, L₂ bzw. L₃ eingestrahlt, deren Längen im Verhältnis L₁ : L₂ : L₃ = 1 : 2 : 3 gewählt sind. Die Achsen der drei Faserspulen L₁, L₂ bzw. L₃ stehen orthogonal zueinander. Die einzige Lichtquelle LQ wird gepulst betrieben, und zwar mit einem Tastverhältnis, dessen Einschaltdauer (EIN-Dauer) der Laufzeit des Lichts durch die kürzeste Faserspule L₁ entspricht, während die Ausschaltdauer (AUS-Dauer) gleich oder größer sein muß als die Laufzeit des Lichts durch die längste Faserspule L₃. Wird diese Bedingung eingehalten, so ist eine Trennung und Einzelauswertung der Antwort- oder Auslesesignale der drei Faserspulen möglich.

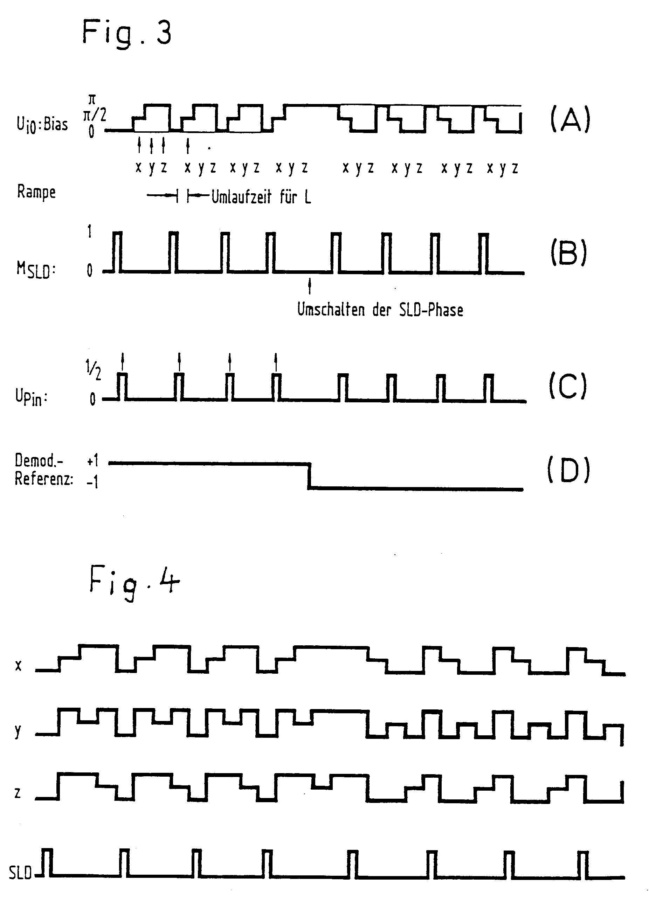

Für die Ansteuerung und Auslesung der einer Raumachse zugeordneten Sensorsignale gelten im Prinzip die Erläuterungen zu der in der europäischen Patentanmeldung EP-A1-0 400 197 erläuterten Prinzipien, die nachfolgend anhand der Fig. 3 nochmals kurz zusammengefaßt werden.

Die Lichtquelle LQ (Fig. 1), vorzugsweise eine Superlumineszenzdiode, wird periodisch EIN/AUS-geschaltet (vgl. Fig. 3(B)), wobei die Einschaltdauer (Pegel 1) etwas kleiner oder gleich der Dauer der Umlaufzeit des Lichts durch die kürzeste Faserspule L₁ gewählt ist, während die Dauer der Ausschaltzeit (Pegel 0) mindestens gleich oder größer ist als die Dauer der Laufzeit des Lichts durch die längste Faserspule L₃. Zur Auswertung der Signale für eine erste Raumachse, der im dargestellten Beispiel die kürzeste Faserspule L₁ zugeordnet ist (x-Kanal), wird der Phasenmodulator PM mit einem Bias-Signal beaufschlagt, dessen zeitlicher Verlauf in Fig. 3(A) dargestellt ist. Während einer ersten Halbperiode der Auswertung steht das Bias-Signal für den x-Kanal auf π/2 (bzw. (n + 1/2)·π). Während einer zweiten Halbperiode der Auswertung des x-Kanals wechselt der Bias-Pegel auf -π/2 (bzw. - (n + 1/2)·π; n ganzzahlig positiv) . Für die Signale aus den beiden anderen Faserspulen L₂, L₃ (y-Kanal bzw. z-Kanal) steht das Bias-Signal auf ± π (bzw. n·(± π); n ganzzahlig positiv).

Die Demodulatorreferenz (vgl. Fig. 3(D)) wechselt, wie ebenfalls in der europäischen Patentanmeldung EP-A1-0 400 197 erläutert, mit dem Wechsel des Bias-Pegels am Phasenmodulator PM.

Die Fig. 4 verdeutlicht die Phasenmodulator-Ansteuersignale für die sequentielle (Zeitmultiplex-)Auslesung der Drehratensignale für die drei Raumachsen, d. h. für die Kanäle x, y und z. In der untersten Zeile sind wiederum die Ansteuerpulse für die Lichtquelle LQ (Superlumineszenzdiode SLD) dargestellt. Die Bias-Signale für den Phasenmodulator PM bei Auslesung des x-Kanals sind in der obersten Zeile wiedergegeben, die der Darstellung der Fig. 3(A) entspricht. Für die Auslesung der Signale des y-Kanals wird ganz entsprechend verfahren, d. h. für den diesem y-Kanal zugeordneten Zeitschlitz wechseln die Bias-Signale zwischen ±π/2 (bzw. ±π·n; n ganzzahlig positiv). Während der dem y-Kanal zugeordneten Auslesezeit wird der Bias-Pegel beim Auftreten der Signale des x-Kanals bzw. des z-Kanals in ein Arbeitspunkt-Minimum der einer Cosinus-Funktion folgenden Verlaufskurve der Sagnac-Phase gelegt, d. h., während der y-Kanal ausgewertet wird, wird der Phasenmodulator für den x-Kanal bzw. den z-Kanal mit einem Bias-Signal entsprechend einer Phasenverschiebung von ±π (bzw. ±π·n; n ganzzahlig positiv) beaufschlagt.

Ganz entsprechend wird bei der Auslesung der Signale der dritten Raumachse (z-Kanal) verfahren, wie sich unschwer aus der dritten Zeile der Signalverlaufsdarstellungen der Fig. 4 ablesen läßt.

Die wesentlichen Merkmale einer erfindungsgemäßen mehrachsigen Drehratensensoranordnung im Vergleich zu einem einachsigen Closed-Loop-Faserkreisel lassen sich wie folgt zusammenfassen:
1. Nach dem zweizen Strahlteiler ST₂ (Hauptstrahlteiler) und dem Phasenmodulator PM wird der Lichtweg in n (vorzugsweise in drei) unabhängige, geschlossene Lichtwege aufgeteilt.
2. Die jeweiligen Längen der einzelnen Lichtwege stehen im Verhältnis 1 : 2 : 3 : 4 : ... : n.
3. Die Lichtquelle LQ ist maximal für eine Zeit T₁ angeschaltet, die gerade der Umlaufzeit des Lichts durch den kürzesten Lichtweg entspricht, und dann für eine Zeit n T₁ ausgeschaltet.
4. Durch den Phasenmodulator PM laufen dadurch n Pulse, deren zeitliche Reihenfolge der Laufzeit durch den jeweiligen Lichtweg entspricht, d. h. jeder Puls ist mit einer anderen Drehrateninformation behaftet und kann individuell moduliert werden.
5. Am Photodetektor PD liegt ebenfalls diese Pulsfolge an.
6. Die Unterscheidung der Signale erfolgt entweder nach dem Photodetektor PD durch Zeitmultiplexauswertung bzw. -austastung oder am Phasenmodulator PM durch eine entsprechende Phasenbeaufschlagung (Bias-Signal; vgl. Fig. 3 und 4). Durch die Phasenbeaufschlagung mit ±π·n (n ganzzahlig positiv) wird der Antwortpuls nahezu dunkel getastet und zeigt minimale Drehrateninformation (cosΩ). Bei Beaufschlagung mit ±π·(n + 1/2) (n ganzzahlig positiv) ergibt sich für den Antwortpuls eine maximale Drehrateninformation (Arbeitspunkt im Wendepunkt der Sagnac-Funktion cosΩ).
7. Bei der Phasenbeaufschlagung kann der Bias-Phasenwechsel am Phasenmodulator PM so erfolgen, daß am Photodetektor PD ein niederfrequentes Signal der Drehrate einer einzelnen Achse auftritt (vgl. Fig. 4).

Für eine erfindungsgemäße dreiachsige faseroptische Drehratensensoranordnung ergeben sich gegenüber einer einachsigen Drehratensensoranordnung folgende Vorteile:
- Die Elektronik ist hardwaremäßig identisch zu der bei einer einachsigen Sensoranordnung.
- Die optischen Bauelemente sind nahezu identisch mit Ausnahme zweier zusätzlich benötigter 1 x 3-Koppler.
- Der Platzbedarf für eine Sensortriade ist um den Faktor 3 geringer.
- Die Leistungsaufnahme der Gesamtanordnung ist um den Faktor 3 geringer.
- Bei den Kosten ergibt sich eine Einsparung von ca. Faktor 2,2 im Vergleich zu drei einzelnen Drehratensensoranordnungen.
- Die Zuverlässigkeit einer erfindungsgemäßen Sensortriade steigt um den Faktor √3, da alle kritischen Komponenten, insbesondere bei den elektronischen Baugruppen, nur einmal statt dreimal vorhanden sind.

Als Nachteil sei vermerkt, daß die Lichtausbeute um den Faktor von ca. 9 verringert wird. Jedoch stehen zwischenzeitlich sehr lichtstarke Superlumineszenzdioden zur Verfügung, so daß dieser Nachteil zumindest teilweise kompensierbar ist.

## Patentansprüche

1. Mehrachsige faseroptische Drehratensensoranordnung mit
- einer Lichtquelle (LQ), der
-- ein erster Strahlteiler (ST₁),
-- ein Polarisator (P),
-- ein zweiter Strahlteiler (ST₂) und
-- ein Phasenmodulator (PM)
in dieser Reihenfolge nachgeschaltet sind,
- einem von einem zweiten Ausgang des ersten Strahlteilers (ST₁) beaufschlagten Photodetektor (PD) sowie mit
- einem mit dem Photodetektor (PD) gekoppelten Analog-/Digital-Wandler (A/D), der eine Drehraten-rückstellende Regelschaltung (CL) über einen Digital-/Analog-Wandler (D/A) speist, der mit einem Rückstelleingang des Phasenmodulators (PM) verbunden ist,
**dadurch gekennzeichnet**, daß
- an die beiden Ausgänge des Phasenmodulators (PM) je ein Koppler (K1, K2) angeschlossen ist, welche die beiden modulierten Ausgangslichtstrahlen des zweiten Strahlteilers (ST₂) in eine gleiche Mehrzahl (n) von Paaren von Lichtstrahlen aufteilen und paarweise in die jeweiligen beiden Enden einer Mehrzahl (n) von Faserspulen L₁, L₂, L₃, ..., Lₙ einstrahlen, deren Lichtweglängen im Verhältnis L₁ : L₂ : L₃ : ... : Lₙ = 1 : 2 : ... : n gewählt sind, und daß
- die Lichtquelle (LQ) mit einem Tastverhältnis EIN/AUS-geschaltet wird, dessen EIN-Dauer (T₁) der Umlaufzeit des Lichts durch die kürzeste Faserspule L₁ und dessen AUS-Dauer mindestens der Umlaufzeit des Lichts durch die längste der Faserspulen Lₙ entspricht.

2. Drehratensensoranordnung nach Anspruch 1, **dadurch gekennzeichnet**, daß drei für Drehratenmessungen in drei orthogonalen Raumachsen ausgerichtete Faserspulen L₁, L₂, L₃ vorgesehen sind.

3. Drehratensensoranordnung nach Anspruch 2, **dadurch gekennzeichnet**, daß zur Gewinnung der Drehrateninformation (x, y, z) der einzelnen Raumachsen die Ausgangssignale des Photodetektors (PD) in Zeitmultiplex derart ausgewertet werden, daß den einzelnen Raumachsen jeweils mindestens ein Zeitschlitz gleicher Dauer innerhalb einer Modulationsperiode des Auslesesignals zugeordnet ist, wobei während des einer bestimmten Raumachse zugeordneten Zeitschlitzes der Phasenmodulator (PM) mit einem Bias-Signal beaufschlagt wird, das zu einem maximalen Drehratensignal für diese Raumachse führt, während für die zeitlich davor oder danach auftretenden Drehratensignale der anderen Raumachsen dem Phasenmodulator (PM) ein Bias-Signal zugeführt wird, das für die zu diesen anderen Raumachsen gehörenden Auslesesignalen nahezu Dunkelwerte liefert.

## Claims

1. Multi-axis fibre-optic rotational speed sensor arrangement having
- a light source (LQ) downstream of which
-- a first beam splitter (ST₁),
-- a polariser (P),
-- a second beam splitter (ST₂) and
-- a phase modulator (PM)
are connected in this sequence,
- a photodetector (PD) to which a second output of the first beam splitter (ST₁) is applied, and having
- an analog/digital converter (A/D), which is coupled to the photodetector (PD) and feeds a closed loop (CL), which resets the rotational speeds, via a digital/analog converter (D/A) which is connected to a reset input of the phase modulator (PM),
characterised in that
- connected to each of the two outputs of the phase modulator (PM) is a coupler (K1, K2) which divide the two modulated output light beams of the second beam splitter (ST₂) into an equal plurality (n) of pairs of light beams and radiate in pairs into the respective two ends of a plurality (n) of fibre coils L₁, L₂, L₃ , ..., Lₙ whose light path lengths are selected in the ratio L₁ : L₂ : L₃ : ...: Lₙ = 1 : 2 : ... : n, and in that
- the light source (LQ) is switched ON/OFF with a pulse-duty factor whose ON duration (T₁) corresponds to the circulation time of the light through the shortest fibre coil L₁ and whose OFF duration corresponds at least to the circulation time of the light through the longest of the fibre coils Lₙ.

2. Rotational speed sensor arrangement according to Claim 1, characterized in that three fibre coils L₁, L₂, L₃ are provided aligned for rotational speed measurements along three orthogonal spatial axes.

3. Rotational speed sensor arrangement according to Claim 2, characterised in that in order to obtain the rotational speed information (x, y, z) of the individual spatial axes the output signals of the photodetector (PD) are evaluated in time-division multiplex in such a way that in each case at least one time slot of the same duration within a modulation period of the readout signal is assigned to the individual spatial axes, it being the case that during the time slot assigned to a specific spatial axis a bias signal, which leads to a maximal rotational speed signal for said spatial axis, is applied to the phase modulator (PM), while for the rotational speed signals, occuring before or after this time, of the other spatial axes a bias signal, which delivers virtually blanking values for the readout signals belonging to said other spatial axes, is fed to the phase modulator (PM).

## Revendications

1. Dispositif capteur de vitesse de rotation multiaxial à fibre optique, comprenant
- une source de lumière (LQ) suivie dans l'ordre
- d'un premier séparateur de faisceau (ST₁),
- d'un polariseur (P)
- d'un second séparateur de faisceau (ST₂) et
- d'un modulateur de phase (PM),
- un détecteur photo-électrique (PD) relié à une seconde sortie du premier séparateur de faisceau (ST₁) ainsi
- qu'un convertisseur analogique-numérique (A/D) couplé avec le détecteur photo-électrique (PD), qui alimente un circuit de réglage (CL) avec remise à zéro de la vitesse de rotation par l'intermédiaire d'un convertisseur numérique-analogique (D/A) lequel est relié à une entrée de remise à zéro du modulateur de phase (PM)
caractérisé en ce que
- aux deux sorties du modulateur de phase (PM) est relié à chaque fois un coupleur (K1, K2) lesquels divisent les deux faisceaux lumineux de sortie modulés du second séparateur de faisceau (ST₂) en une même pluralité (n) de paires de faisceaux lumineux et les injectent par paires dans les deux extrémités respectives d'une pluralité (n) de bobines de fibres L₁, L₂, L₃, ..., Lₙ dont les longueurs des trajets optiques sont choisies dans le rapport L₁ : L₂ : L₃ : ... : Lₙ = 1 : 2 : ... : n, et que
- la source de lumière (LQ) est commandée avec un taux d'impulsions MARCHE/ARRET dont la durée MARCHE (T₁) correspond au temps d'un passage de la lumière par la bobine de fibre L₁ la plus courte et dont la durée ARRET correspond au moins au temps d'un passage de la lumière par la plus longue des bobines de fibres Lₙ.

2. Dispositif capteur de vitesse de rotation à fibre optique selon la revendication 1, caractérisé en ce qu'il comprend trois bobines de fibres L₁, L₂, L₃ orientées suivant trois axes spatiaux orthogonaux.

3. Dispositif capteur de vitesse de rotation à fibre optique selon la revendication 2, caractérisé en ce que pour l'acquisition de l'information de vitesse de rotation (x, y, z) des différents axes spatiaux, les signaux de sortie du détecteur photo-électrique (PD) sont analysés en multiplexage dans le temps, de telle sorte qu'aux différents axes spatiaux est associée à chaque fois au moins une fenêtre de temps d'égale durée à l'intérieur d'une période de modulation du signal de lecture, le modulateur de phase (PM) recevant pendant la fenêtre de temps associée à un axe spatial déterminé, un signal de polarisation qui conduit à un signal de vitesse de rotation maximum pour cet axe spatial, tandis que le modulateur de phase (PM) reçoit pour les signaux de vitesse de rotation des autres axes spatiaux apparaissant plus tôt ou plus tard, un signal de polarisation qui fournit presque des valeurs d'obscurité pour les signaux de lecture associés à ces autres axes spatiaux.
